(19)

Europäisches
Patentamt
European
Patent Office
Office européen
des brevets

(11) **EP 1 850 156 A1**

(12) **EUROPEAN PATENT APPLICATION**

(43) Date of publication:
**31.10.2007 Bulletin 2007/44**

(51) Int Cl.:
**G02B 6/00** (2006.01)

(21) Application number: **06123232.8**

(22) Date of filing: **31.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **27.04.2006 KR 20060038333**

(71) Applicant: **Samsung Electronics Co., Ltd.
Suwon-si, Gyeonggi-Do (KR)**

(72) Inventors:
• **Hwang, Seong-mo
  Nongseo-dong
  Giheung-gu
  Gyeonggi-do (KR)**

• **You, Jae-ho
  nongseo-dong
  Giheung-gu
  Gyeonggi-do (KR)**

(74) Representative: **Greene, Simon Kenneth
  Elkington and Fife LLP
  Prospect House
  8 Pembroke Road
  Sevenoaks,
  Kent TN13 1XR (GB)**

(54) **Polarizing light guide plate unit and backlight unit and display device employing the same**

(57)     Provided are a polarizing light guide plate (LGP) unit (200), a backlight unit (400) employing the polarizing LGP unit, and a display device employing the backlight unit. The polarizing LGP unit includes: a LGP (260) guiding light emitted by a light source (100); a collimator (220) that is disposed on the LGP and including a plurality of reflective patterns (226), each pattern having an inclined surface (226b) that reflects light exiting the LGP in an upward direction; and a polarization separating layer (240), disposed between the plurality of reflective patterns and the LGP and transmitting light of a first polarization and reflecting light of a second polarization orthogonal to the first polarization.

FIG. 2

**Description**

BACKGROUND OF THE INVENTION

The present invention relates to a polarizing light guide plate (LGP) unit with improved polarization performance and a backlight unit employing the polarizing LGP unit, and a display device employing the backlight unit.

Flat panel displays are categorized into self-emissive displays that generate light themselves to produce an image and non-emissive displays that use light from an external light source to create an image. A representative example of a non-emissive display is a liquid crystal display (LCD). An LCD needs a separate light source such as a backlight unit in order to create images.

Current LCDs use only about 5% of the total amount of light emitted from a light source to produce an image. The low light utilization efficiency results from absorption of light in polarizers or color filters within an LCD. An LCD includes first and second substrates respectively having first and second electrodes for creating electric fields with liquid crystal material injected between the first and second substrates. A surface of the first substrate on which the first electrode is formed is disposed opposite a surface of the second substrate on which the second electrode is formed. In the LCD, an electric field created by applying voltages to the first and second electrodes alters the alignment of liquid crystal molecules to control the transmittance of light. In this way, the LCD displays an image.

That is, the LCD acts like a shutter, either allowing light to pass through or not by changing the polarization direction of linearly polarized light. Because the LCD uses only light linearly polarized in one direction, a polarizer is disposed on both front and back sides of the LCD. The polarizer disposed on both sides of the LCD is an absorptive polarizer that transmits light polarized in one direction and absorbs light polarized in the other direction. Absorbing about 50% of incident light into the polarizer is the largest factor in low light utilization efficiency of the LCD.

In order to alleviate this problem, research is being actively made to increase light utilization efficiency by replacing an absorptive polarizer or by converting most of light into light having the same polarization direction as the polarization direction of a rear polarizer disposed on a rear surface of the LCD. For example, a multilayer reflective polarizing film such as a dual brightness enhancement film (DBEF) may be attached onto a light guide plate (LGP) in order to increase the light utilization efficiency of the LCD. However, due to the expense of a reflective polarizing film and the absence of a polarizing converting element, it is difficult to increase light utilization efficiency. Thus, there is a need for focused research on a polarizing LGP separating and converting polarization.

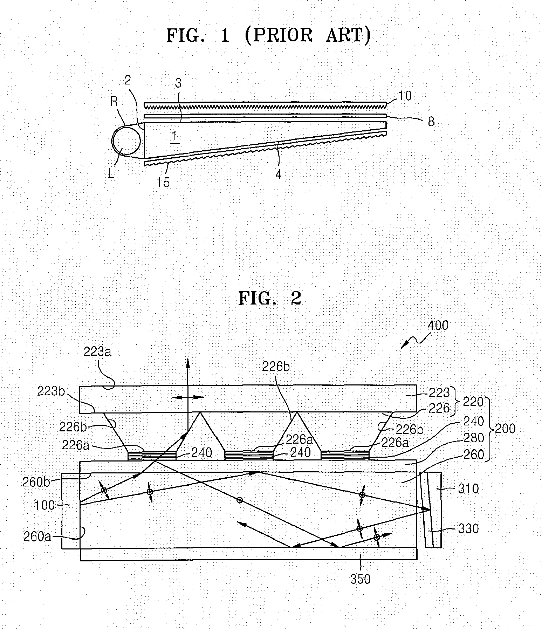

FIG. 1 is a cross-sectional view of a conventional polarizing backlight unit. Referring to FIG. 1, the conventional polarizing backlight unit includes a lamp L acting as a linear light source, a silver sheet R that is disposed on one side of the LGP 1 and surrounds the lamp L, a polarization converting element 15 disposed on a bottom surface 4 of the LGP 1, a polarization separating plate 8 disposed opposite an exit surface 3 of the LGP 1, and a prism sheet 10 facing the polarization separating plate 8.

The LGP 1 converts light that is emitted by the lamp L and is incident through an incident surface 2 into surface light that exits through the exit surface 3. The polarization separating plate 8 causes only light of one polarization to exit after separation while the polarization converting element 15 converts the polarization direction of light of the other polarization, thus increasing light utilization efficiency. However, the polarization separating plate 8 that separates light of the one polarization using the relationship between refractive index and incident angle does not cause the light to escape perpendicularly to the exit surface 3. Thus, the conventional backlight unit emits the light with a broad range of angles and requires the separate prism sheet 10 that allows light to exit perpendicularly to the exit surface3. Also, the prism sheet 10 is not integrated into the LGP 1, thus making fabrication of the LGP 1 complicated.

SUMMARY OF THE INVENTION

The present invention provides a polarizing light guide plate (LGP) unit with improved polarization performance and a backlight unit employing the polarizing LGP unit, and a display device employing the backlight unit.

According to an aspect of the present invention, there is provided a polarizing LGP unit including: a LGP guiding light emitted by a light source; a collimator that is disposed on the LGP and comprising a plurality of reflective patterns, each pattern having an inclined surface that reflects light exiting the LGP in an upward direction; and a polarization separating layer, disposed between the plurality of reflective patterns and the LGP and transmitting light of a first polarization and reflecting light of a second polarization orthogonal to the first polarization.

According to another aspect of the present invention, there is provided a backlight unit including: a light source; a LGP guiding light from the light source; a COLLIMATOR that is disposed on the LGP and including a plurality of reflective patterns, each pattern having an inclined surface that reflects light exiting the LGP in an upward direction; a polarization separating layer, disposed between the plurality of reflective patterns and the LGP and transmitting light of a first polarization and reflecting light of a second polarization orthogonal to the first polarization; and a reflective plate disposed on a side of the LGP.

According to another aspect of the present invention, there is provided a display device including: a backlight unit including a light source, a LGP guiding light from the light source, a collimator that is disposed on the LGP and including a plurality of reflective patterns, each pattern having an inclined surface that reflects light exiting the LGP in an upward direction, a polarization separating layer, disposed between the plurality of reflective patterns and the LGP and transmitting light of a first polarization and reflecting light of a second polarization orthogonal to the first polarization, and a reflective plate disposed on a side of the LGP; and a display panel producing an image using light exiting the backlight unit.

BRIEF DESCRIPTION OF THE DRAWINGS

The above and other features and advantages of the present invention will become more apparent by describing in detail exemplary embodiments thereof with reference to the attached drawings in which:

FIG. 1 is a cross-sectional view of a conventional polarizing backlight unit;
FIG. 2 is a cross-sectional view of a polarizing light guide plate (LGP) unit and a backlight unit employing the polarizing LGP unit according to embodiments of the present invention;
FIGS. 3A and 3B are perspective views of the collimator shown in FIG. 2 according to embodiments of the present invention;
FIG. 4 is a diagram illustrating the structure of the polarization separating layer shown in FIG. 2 and the process of separating polarization according to an embodiment of the present invention;
FIG. 5 is a graph illustrating transmittances of light of S polarization and P polarization exiting the polarizing LGP unit of FIG. 2 with respect to incident angle;
FIG. 6 is a graph illustrating transmittances of light of S polarization and P polarization exiting the polarizing LGP unit of FIG. 2 with respect to wavelength;
FIGS. 7A and 7B are cross-sectional views of polarizing LGP units according to embodiments of the present invention; and
FIG. 8 is a cross-sectional view of a display device according to an embodiment of the present invention.

DETAILED DESCRIPTION OF THE INVENTION

A backlight unit and a display device employing the backlight unit according to preferred embodiments of the present invention will now be described in detail with reference to accompanying drawings. The invention may, however, be embodied in many different forms and should not be construed as being limited to the embodiments set forth herein; rather, these embodiments are provided so that this disclosure will fully convey the concept of the invention to those skilled in the art. In the drawings, like reference numerals in the drawings denote like elements and the size of each element may be exaggerated for clarity and convenience.

FIG. 2 is a cross-sectional view of a polarizing light guide plate (LGP) unit 200 and a backlight unit 400 employing the polarizing LGP unit 200 according to embodiments of the present invention. Referring to FIG. 2, the backlight unit 400 includes a light source 100 and the polarizing LGP unit 200 converting unpolarized light emitted by the light source 100 into linearly polarized light before allowing the light to exit.

For example, a light source 100 may be a linear light source such as cold cathode fluorescent lamp (CCFL) or point light source such as a light-emitting diode (LED). The polarizing LGP unit 200 includes a LGP 260 guiding light emitted by the light source 100, a collimator 220 disposed on the LGP 260, and a polarization separating layer 240 that is disposed between the LGP 260 and the collimator 220 and separates light exiting the LGP 260 according to the polarization components.

The LGP 260 has a first incident surface 260a and a first exit surface 260b and light emitted from the light source 100 is incident through the first incident surface 260a and exits through the first exit surface 260b. The LGP 260 is formed of a transparent material that can transmit incident light, such as an optically isotropic material such as Polymethylmethacrylate (PMMA) or Poly Carbonate (PC).

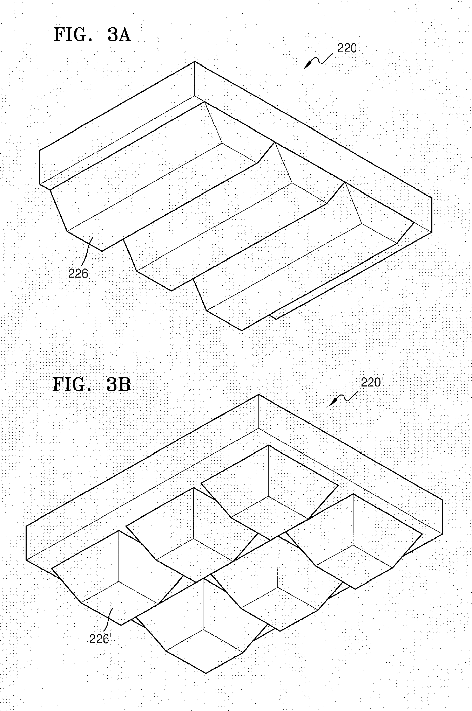

The collimator 220 includes a plurality of reflective patterns 226. The collimator 220, for example, includes a substrate 223 and a plurality of reflective patterns arranged on the substrate 223. The reflective patterns 226 are disposed opposite the LGP 260 and reflect light exiting the LGP 260 in an upward direction. Each of the plurality of reflective patterns 226 has a second incident surface 226a through which light exiting through the first exiting surface 260b enters and an inclined surface 226b reflecting the incident light toward the second exiting surface 223a. The reflective pattern 226 may have a polyhedral shape. The inclined surface 226b collimates light exiting toward the second exit surface 223a in a direction perpendicular to the second exiting surface 223a. That is, the direction in which light is collimated can be adjusted by adjusting the slope of the inclined surface 226b. The inclined surface 226b has a slope such that an angle between light that is reflected from the inclined surface 226b and exits through the second exit surface 223a and a line normal to the second exit surface 223a is between about -10° and about 10°. FIGS. 3A and 3B are perspective views of the collimator shown in FIG. 2 according to embodiments of the present invention. Referring to FIGS. 3A and 3B, the collimator 220 includes a plurality of reflective patterns 226 that may be arranged in one or two-directional arrays.

The polarization separating layer 240 is formed of a plurality of thin films having different refractive indices, formed between the first exit surface 260b and the second incident surface 226a and transmits light of a first polarization of light entering through the second incident surface 226a and reflects light of a second polarization orthogonal to the first polarization. For example, the first polarization and the second polarization may be P and S polarizations, respectively.

The principle of splitting incident light into the different polarizations within the polarization separating layer 240 will be described later.

The polarizing LGP unit 200 may include an adhesion layer 280. The adhesion layer 280 is disposed between the LGP 260 and the plurality of polarization separating layers 240. The adhesion layer 280 may have a lower refractive index than that of the LGP 260. In this case, because only light having an incident angle less than a critical angle of light exiting the first exit surface 260b can be transmitted through the adhesion layer 260b, light is incident on the inclined surface 226b over a narrow range of angles, thus causing light reflected from the inclined surface 226b to exit through the second exit surface 223a over a narrow range of angles.

A reflective plate 310 is disposed opposite a surface of the LGP 260 facing the first incident surface 260a and reflects light reflected from an interface between the LGP 260 and the adhesion layer 280 and light of the polarization reflected by the polarization separating layer 240 back into the LGP 260. The light reflected by the reflective plate 310 propagates inside the LGP 260 along a partially changed path before being transmitted through the adhesion layer 280.

A first polarization converting element 330 may be disposed between the reflective plate 310 and the LGP 260. Light of S polarization reflected instead of being transmitted through the polarization separating layer 240 is converted into light of P polarization before being transmitted through the polarization separating layer 240. To facilitate conversion of polarization, a second polarization converting element 350 may be disposed on a surface facing the first exit surface 260b. For example, the first and second polarization converting elements 330 and 350 may be 1/4 waveplates made of an anisotropic material. The backlight unit 400 may include either the first or second polarization converting element 330 or 350.

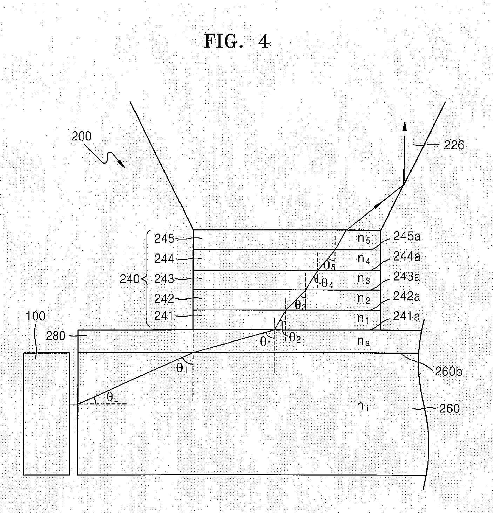

FIG. 4 is a diagram illustrating the structure of the polarization separating layer 240 of the polarizing LGP unit 200 and the process of separating light according to the polarization components. Referring to FIG. 4, the polarizing separating layer 240 is formed from a stack of first through fifth layers 241 through 245 having refractive indices $n_1$ through $n_5$ on a structure in which the LGP 260 having a refractive index $n_i$ and the adhesion layer 280 having a refractive index $n_a$ have been sequentially stacked. The propagation path of light through the polarizing LGP unit 200 will now be described in greater detail. First, the range of incident angle $\theta_i$ of light propagating to the adhesion layer 280 through the LGP 260 is defined by Equation (1)

$$90°-\theta_{c1} = 90°-\sin^{-1}(1/n_i) < \theta_i < \theta_{c2} = \sin^{-1}(n_a/n_i) \dots (1)$$

$\theta_{c1}$ denotes a critical angle at which total reflection occurs as light propagates from the LGP 260 having the refractive index $n_i$ to an air layer having a refractive index of 1. Because $\theta_{c1}$ is a maximum value of an angle $Q_L$ of light incident on the LGP 260 as light from the light source 100 propagates toward the LGP 260 through the air layer, $90°-\theta_{c1}$ is a minimum value of the incident angle $\theta_i$ of light traveling toward the adhesion layer 280. $\theta_{c2}$ denotes a critical angle at which total reflection occurs as light propagates from the LGP 260 toward the adhesion layer 280 and is a maximum value of the incident angle $\theta_i$ of light that can propagate toward the adhesion layer 280. Incident angles $\theta_1$ through $\theta_5$ at interfaces 241a through 245a between the adhesion layer 280 and the first layer 241, between the first and second layers 241 and 242, between the second and third layers 242 and 243, between the third and fourth layers 243 and 244, and between the fourth and fifth layers 244 and 245 are determined based on the range of the incident angle $\theta_i$ defined by the Equation (1) and Snell's law. When Brewster's angles $\theta_{B1}$ through $\theta_{B5}$ fall within the ranges of incident angles $\theta_1$ through $\theta_5$ at the interfaces 241a through 245a, respectively, light of S polarization is reflected and light of P polarization is transmitted. Brewster's angle is defined as $\tan^{-1}(n_2/n_1)$ when light propagates from a medium having a refractive index $n_1$ to a medium having a refractive index $n_2$. The ranges of incident angles $\theta_1$ through $\theta_5$ should respectively contain the Brewster's angles $\theta_{B1}$ through $\theta_{B5}$.

For example, it is assumed that the refractive index $n_1$ is higher than the refractive index $n_2$ and the range of incident angle $\theta_2$ of light propagating from the medium having high refractive index $n_1$ to the medium having low refractive index $n_2$ includes a Brewster's angle $\theta_{B2}$ at the interface 242a between the first and second layers 241 and 242. Angle $\theta_3$ at which light is transmitted through the interface 242a is an angle at which light is incident to the third layer 243 having a refractive index $n_3$. The angle $\theta_3$ is greater than the incident angle $\theta_2$. In order for the range of incident angle $\theta_3$ to contain Brewster's angle $\theta_{B3}$ at the interface 243a, the Brewster's angle $\theta_{B3}$ should be greater than the Brewster's

angle$\theta_{B2}$ and $n_3$ should be greater than $n_2$. Using this principle, the polarization separating layer 240 may include a plurality of alternating high and low refractive index layers.

The polarization separating layer 240 includes thin layers of any material that is transparent at visible light wavelengths such as $Al_2O_3$, CeO2, $Ta_2O_5$, $TiO_2$, ZnS, $ZrO_2$, $CaF_2$, or $MgF_2$.

When the LGP 260 and the adhesion layer 280 have refractive indices of 1.59 and 1.45, respectively, and when the polarization separating layer 240 has alternating layers of two materials with refractive indices of 2.35 and 1.63, $51.03° < \theta_i < 65.78°$ as defined by the Equation (1).

Table 1 shows the ranges of incident angles $\theta_1$ through $\theta_5$ and Brewster's angles $\theta_{B1}$ through $\theta_{B5}$ calculated at the interfaces 241a through 245a.

Table 1

|  | Range of incident angle | Brewster's angle |
|---|---|---|
| First interface | $58.5 < \theta_1 < 90.0$ | $\theta_{B1} = 58.3°$ |
| Second interface | $31.7 < \theta_2 < 38.1$ | $\theta_{B2} = 34.8°$ |
| Third interface | $49.3 < \theta_3 < 62.8$ | $\theta_{B3} = 55.3°$ |
| Fourth interface | $31.7 < \theta_4 < 38.1$ | $\theta_{B4} = 34.8°$ |
| Fifth interface | $49.3 < \theta_5 < 62.8$ | $\theta_{B5} = 55.3°$ |

As evident from Table 1, the ranges of incident angles $\theta_2$ through $\theta_5$ respectively contain the Brewster's angles $\theta_{B2}$ through $\theta_{B5}$. Although the range of incident angle $\theta_1$ does not contain the Brewster's angle $\theta_{B1}$, the former may contain the latter by making the refractive index of the adhesion layer 280 slightly greater than 1.45. When the incident angles $\theta_1$ through $\theta_5$ at the interfaces 241a through 245a is equal to the Brewster's angles $\theta_{B1}$ through $\theta_{B5}$, the transmittance of vertical polarization (S polarization) has a minimum value of 0. In this case, a predetermined portion of incident light having S polarization is reflected and only light of horizontal polarization (P polarization) is transmitted. Because the transmittance of light of S polarization progressively increases as the incident angles $\theta_1$ through $\theta_5$ deviate further from the Brewster's angles $\theta_{B1}$ through $\theta_{B5}$, respectively, only a smaller amount of light of S polarization travels toward each successive layer. When the above process is repeated at the interfaces 241a through 245a, light of S polarization is repeatedly reflected from the interfaces 241a through 245a while light of P polarization is separated and then transmitted through the polarization separating layer 240. Most of the light reflected from the interfaces 241a through 245a has S polarization and the remaining light may have P polarization. This is because the amount of light of P polarization transmitted decreases slightly as the incident angles $\theta_1$ through $\theta_5$ deviate further from the Brewster's angles $\theta_{B1}$ through $\theta_{B5}$, respectively. The light of P polarization reflected is converted into light having an incident angle such that it can be transmitted through the polarization separating layer 240. The light of S polarization may be converted into light of P polarization as it propagates inside the LGP 260 because an optically isotropic material included in the LGP 260 has a refractive index that may vary according to the polarization direction. Alternatively, the light of S polarization may be converted into light of P polarization by the polarization converting elements 330 and 350 before being transmitted through the polarization separating layer 240.

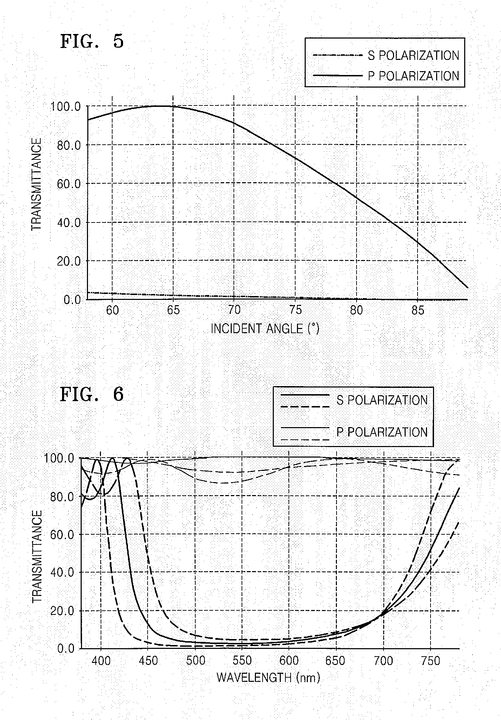

FIG. 5 is a graph illustrating transmittances of light of S polarization and P polarization exiting the polarizing LGP unit (200 of FIG. 2) with respect to incident angle. The light has a wavelength of 550 nm. As evident from the graph of FIG. 5, the light of P polarization has a maximum transmittance of 100% at an incident angle of 64° (of light being incident to the polarization separating layer 240) and the transmittance decreases slightly as the incident angle deviates further from 64°. On the other hand, the light of S polarization a transmittance less than 5% over the entire range of incident angles. Thus, the polarization separating layer exhibits excellent efficiency.

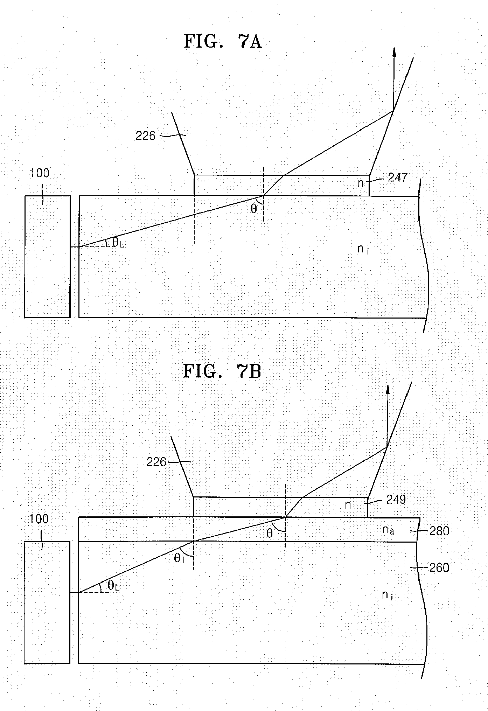

FIG. 6 is a graph illustrating transmittances of light of S polarization and P polarization exiting the polarizing LGP unit (200 of FIG. 2) with respect to wavelength. Solid lines represent transmittances at an incident angle of 64° and dotted lines represent transmittances at incident angles of 54° and 74°. As evident from the graph of FIG. 6, light of P polarization has transmittance greater than about 90% over the entire range of wavelengths while light of S polarization has transmittance less than about 20% in most of the visible light region of 450 nm to 700 nm.

As the number of layers in the polarization separating layer 240 increases, the efficiency of polarization separation can be improved because separation of polarization occurs more using a larger number of interfaces. Furthermore, the efficiency of polarization separation can be increased by choosing the refractive index of each layer such that a Brewster's angle is optimally selected with respect to the range of an incident angle.

The polarization separating layer 240 may be formed of a single thin layer. FIGS. 7A and 7B are cross-sectional views of polarizing LGP units with polarization separating layers 247 and 249, each formed of a single thin layer according to embodiments of the present invention. The polarizing LGP unit of FIG. 7A does not include any adhesion layer while the polarizing LGP unit of FIG. 7B includes an adhesion layer 280. Referring to FIG. 7A, because the maximum value of an angle $\theta_L$ of light entering a LGP 260 from a light source 100 is $\sin^{-1}(1/n_i)$, the range of angle $\theta$ of light being incident to the polarization separating layer 247 is between $90°-\sin^{-1}(1/n_i)$ and $90°$. Thus, the refractive index n of the polarization separating layer 247 may satisfy the following Equation (2) so that a Brewster's angle is within the range of incident angle $\theta$ .

$$\tan^{-1}(n/n_i) > 90°-\sin^{-1}(1/n_i) \qquad (2)$$

Referring to FIG. 7B, as described with reference to FIG. 4, the range of angle $\theta_i$ being incident on the adhesion layer 280 is as defined by the Equation (1). Because the range of angle $\theta$ of light being incident to the polarization separating layer 249 is between $\sin^{-1}[(n_i/n_a)\cos(\sin^{-1}(1/n_i))]$ and $90°$, the refractive index n of the polarization separating layer 249 may satisfy the following Equation (3) so that a Brewster's angle is within the range of incident angle $\theta$ .

$$\tan^{-1}(n/na) > \sin^{-1}[(n_i/n_a)\cos(\sin^{-1}(1/n_i))] \qquad (3)$$

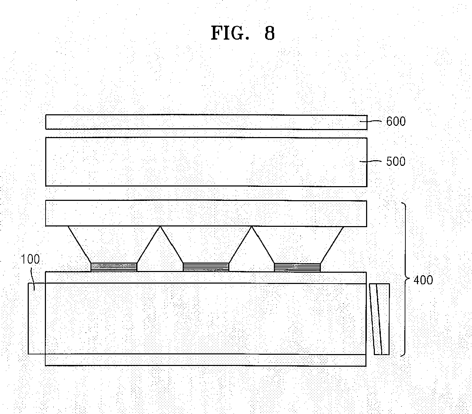

FIG. 8 is a cross-sectional view of a display device according to an embodiment of the present invention. Referring to FIG. 8, the display device includes a backlight unit 400 including a polarizing LGP unit according to an embodiment of the present invention and a display panel 500. The display panel 500 may be, for example, a LCD panel. The display device further includes a diffusion plate 600 disposed above the display panel 500. Since light polarized by the backlight unit 400 may exit perpendicularly to the display panel 500 based on the same principle as described earlier, the detailed explanation thereof will not be given. The display panel 500 uses light emitted from the backlight unit 400 to produce an image and the diffusion plate 600 diffuses light so as to provide a wide viewing angle for the image produced by the display panel 500.

A polarizing LGP unit having the above-mentioned configuration according to the present invention provides increased amount of polarized light and increased amount of light exiting perpendicularly to the polarizing LGP. Thus, a backlight unit employing the polarized LGP unit according to the present invention has high light utilization efficiency and improved image characteristics such as brightness or contrast ratio when it is used for a display device. The present invention also provides a simple backlight unit because a structure allowing light to perpendicularly exit can be integrated into the LGP.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1.    A polarizing Light Guide Plate (LGP) unit (200) comprising:

a LGP (260) guiding light emitted by a light source (100);
a collimator (220) that is disposed on the LGP (260) and comprising at least one reflective pattern (226), having an inclined surface (226b) that is arranged to reflect light exiting the LGP (226) in an upward direction; and
a polarization separating layer (240), disposed between the reflective pattern and the LGP (260) and for transmitting light of a first polarization and for reflecting light of a second polarization orthogonal to the first polarization.

2.    The polarizing LGP unit of claim 1, wherein the reflective pattern (226) has a polyhedral shape.

3.    The polarizing LGP unit of claim 1 or 2, wherein the polarization separating layer (240) includes a plurality of thin films having different refractive indices.

4.    The polarizing LGP unit of claim 1 or 2, wherein the polarization separating layer (240) includes a plurality of alternating two thin films having different refractive indices.

5. The polarizing LGP unit of any preceding claim, wherein the slope of the inclined surface (226b) is adjusted such that an angle between light that is reflected from the inclined surface (226b) and exits through a top surface (223a) of the collimator (220) and a line normal to the top surface is between about -10° and +10°.

6. The polarizing LGP unit of any preceding claim, comprising a plurality of reflective patterns that are arranged in one or two-directional arrays.

7. The polarizing LGP unit of claim 1 or 2, wherein the polarization separating layer (240) is formed of a single thin film with a refractive index n and n satisfies $\tan^{-1}(n/n_i) > 90° - \sin^{-1}(1/n_i)$ when $n_i$ is the refractive index of the LGP.

8. The polarizing LGP unit of claim 3, wherein each of the thin films in the polarization separating layer is made of one selected from the group consisting of $Al_2O_3$, $CeO_2$, $Ta_2O_5$, $TiO_2$, ZnS, $ZrO_2$, $CaF_2$, and $MgF_2$.

9. The polarizing LGP unit of claim 1, further comprising an adhesion layer (280) disposed between the LGP (260) and the polarization separating layer (240).

10. The polarizing LGP unit of claim 9, wherein the polarization separating layer (240) is formed of a single thin film having a refractive index n and n satisfies $\tan^{-1}(n/n_a) > \sin^{-1}[(n_i/n_a)\cos(\sin^{-1}(1/n_i))]$ when $n_i$ and $n_a$ respectively denote refractive indices of the LGP and the adhesion layer.

11. The polarizing LGP unit of claim 1 or 2, further comprising an adhesion layer that is disposed between the LGP and the polarization separating layer and has a lower refractive index than the LGP.

12. A backlight unit (400) comprising:

    a light source (100);
    a polarizing Light Guide Plate (LGP) unit (200) according to any preceding claim; and
    a reflective plate disposed on a side of the LGP.

13. The backlight unit of claim 12, further comprising a first polarization converting element (350) disposed on a bottom surface of the LGP (260).

14. The backlight unit of claim 12 or 13, further comprising a second polarization converting element (330) disposed between the reflective plate (310) and the LGP (260).

15. The backlight unit of claim 14, wherein the second polarization converting element is a 1/4 waveplate.

16. A display device comprising:

    the backlight unit (400) of any of claims 12 to 15; and
    a display panel for producing an image using light exiting the backlight unit (400).

## FIG. 1 (PRIOR ART)

## FIG. 2

FIG. 3A

220

226

FIG. 3B

220'

226'

FIG. 4

FIG. 5

FIG. 6

## FIG. 7A

## FIG. 7B

FIG. 8

**European Patent Office**

**EUROPEAN SEARCH REPORT**

Application Number

EP 06 12 3232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/22834 A (ALLIED SIGNAL INC [US]) 26 June 1997 (1997-06-26) | 1-4,6, 12-16 | INV. G02B6/00 |
| A | * abstract; figures 4,5 * ----- | 5,7-11 | |
| X | US 5 587 816 A (GUNJIMA TOMOKI [JP] ET AL) 24 December 1996 (1996-12-24) | 1,3-10, 12-16 | |
| A | * abstract; figures 1,2 * ----- | 2,11 | |
| A | US 2004/042233 A1 (SUZUKI TOSHIHIRO [JP] ET AL) 4 March 2004 (2004-03-04) * paragraphs [0156], [0159]; figure 28 * ----- | 11 | |

| | | |
|---|---|---|
| | | TECHNICAL FIELDS SEARCHED (IPC) |
| | | G02B |

The present search report has been drawn up for all claims

| Place of search | Date of completion of the search | Examiner |
|---|---|---|
| Munich | 24 January 2007 | Elflein, Wilhelm |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 3232

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2007

| Patent document cited in search report | | Publication date | Patent family member(s) | | Publication date |
|---|---|---|---|---|---|
| WO 9722834 | A | 26-06-1997 | NONE | | |
| US 5587816 | A | 24-12-1996 | NONE | | |
| US 2004042233 | A1 | 04-03-2004 | CN | 1492269 A | 28-04-2004 |
| | | | CN | 1707332 A | 14-12-2005 |
| | | | CN | 1707333 A | 14-12-2005 |
| | | | CN | 1716024 A | 04-01-2006 |
| | | | JP | 2004095390 A | 25-03-2004 |
| | | | KR | 20040020017 A | 06-03-2004 |

EPO FORM P0459

For more details about this annex : see Official Journal of the European Patent Office, No. 12/82